# FASCICULE DE BREVET EUROPEEN

(11) **EP 1 419 337 B1**
(45) Date de publication et mention de la délivrance du brevet: **09.02.2005**
(21) Numéro de dépôt: 02772474.9
(22) Date de dépôt: 31.07.2002
(51) Int. Cl.: F16L 11/08

(54) **RUBAN TEXTILE PLAT DE RENFORT POUR CONDUITE ET CONDUITE AINSI RENFORCEE**
FLACHER TEXTILVERSTÄRKUNGSSTREIFEN FÜR LEITUNGEN UND SO VERSTÄRKTE LEITUNG
FLAT TEXTILE REINFORCING STRIP FOR DUCTS AND THE DUCT THUS REINFORCED

(30) Priorité: 14.08.2001 FR 0110818
(43) Date de publication de la demande: 19.05.2004
(73) Titulaire: Technip France, 92400 Courbevoie (FR)
(72) Inventeur: GEREZ, Jean-Michel, F-75015 Paris (FR); DIEUMEGARD, Christophe, 78600 Maisons-Laffitte (FR)
(74) Mandataire: Bertrand, Didier
(86) Numéro de dépôt international: PCT/FR2002/002764
(87) Numéro de publication internationale: WO 2003/016769

(56) Documents cités:
- EP-A- 0 853 547
- US-A- 2 129 110
- PATENT ABSTRACTS OF JAPAN vol. 008, no. 136 (M-304), 23 juin 1984 (1984-06-23) & JP 59 035924 A (TOUKIYOU SHIKAN KK), 27 février 1984 (1984-02-27) cité dans la demande

## Description

La présente invention concerne un ruban plat destiné à renforcer une conduite de transport de fluide sous pression, notamment une conduite flexible de transport d'hydrocarbures et de gaz.

On connaît par les documents FR 2 739 673 et EP 0 853 547 au nom de la Demanderesse un tel ruban plat servant d'armure à une conduite constituée d'un tube interne étanche, d'un ou plusieurs enroulements (croisés de préférence) d'un ruban plat textile et le cas échéant d'une gaine externe. Le ruban plat textile est réalisé selon la technique des produits thermoplastiques renforcés, en un assemblage de mèches filamentaires ("yarns" ou "rovings") maintenus par des moyens de contention et une matière de liage. Les mèches filamentaires sont avantageusement en aramide (Kevlar®). La compacité préférée des mèches pour les rubans est avantageusement supérieure à 60% et la compacité globale des rubans est supérieure à 39%.

En pratique, on enroule de tels rubans autour du tube interne à l'aide d'une armeuse selon un angle d'armage d'environ 55°. L'armeuse permet de déposer simultanément un grand nombre (de l'ordre d'une cinquantaine) de rubans plats relativement étroits portés par des bobines montées sur une cage en rotation. Une telle technique est coûteuse. D'une part, une armeuse est une machine de précision coûteuse en elle-même. D'autre part, des rubans textiles de renfort fabriqués en petite dimension coûtent plus cher que s'ils étaient fabriqués en grande largeur. Cependant, cette technique est retenue parce qu'elle permet de répartir le jeu global sur un grand nombre de rubans sur le périmètre du tube ; en effet, en raison des tolérances de fabrication de la conduite d'une part, et des déformations de la conduite lors de la mise en service (gonflement sous l'effet de la pression interne) d'autre part, il apparaît nécessairement des jeux dont le cumul donne un jeu global qui doit se répartir entre les rubans ; s'il y a un nombre relativement élevé de rubans, par exemple une cinquantaine, il est plus facile de maîtriser ce jeu global, puisqu'il est réparti sur l'ensemble des rubans ce qui donne un jeu relatif moyen par ruban acceptable alors qu'il ne le serait pas sur un nombre de ruban bien inférieur.

L'homme du métier est tenté d'utiliser des rubans larges pour diminuer les coûts, les rubans larges étant moins chers en eux-mêmes et pouvant être déposés autour du tube interne à l'aide d'une simple rubaneuse, plus rustique et moins chère qu'une armeuse. Cependant, si l'on cherche à utiliser des rubans textiles larges pour réaliser les renforts de conduite, il y aura moins de ruban sur le périmètre du tube et le jeu global se répartira donc sur un nombre de rubans considérablement plus faible, augmentant d'autant la valeur nominale du jeu relatif (ou déjoint) entre les rubans. De tels jeux sont néfastes car ils provoquent le fluage du tube interne et donc le chargement local de la deuxième nappe d'armures quand la conduite est en service. De plus le positionnement des rubans entre eux lors des opérations de rubanage est moins précis que lorsqu'on utilise une armeuse. Aussi maîtrise-t-on mal les jeux et le positionnement des rubans. De plus, lorsque le diamètre externe du tube interne varie en raison des tolérances de fabrication, il est impossible de compenser cette variation quand on utilise un ruban large déjà dimensionné, alors qu'avec un ruban de faible largeur, il suffit d'adapter le nombre de rubans chargés dans l'armeuse.

Pour résoudre ce problème, l'homme du métier pourrait être tenté d'enrouler les rubans avec chevauchement des bords, mais cela entraînerait des inconvénients et notamment des problèmes d'usure et de fatigue. De plus cela créerait des irrégularités susceptibles d'entraîner des défauts dans les couches supérieures successives qu'on est amené à ajouter. Si on tissait le ruban de manière lâche, au moins sur ses bords, pour que les mèches filamentaires des bords en chevauchement s'intercalent les unes entre les autres et ne créent ni discontinuité ni surépaisseur, on n'aurait pas alors la compacité élevée requise selon l'enseignement des brevets de la Demanderesse cités plus haut, nécessaire pour obtenir les caractéristiques de renfort recherchées.

Il existe donc un problème non résolu par l'Homme du métier pour parvenir à réaliser un enroulement d'armures de rubans textiles moins onéreux que dans la technique classique sans renoncer pour autant aux bonnes caractéristiques mécaniques. Tel est le problème que l'invention vise à résoudre.

L'invention atteint son but grâce au fait que le ruban textile utilisé pour réaliser les renforts est un ruban comportant des bords amincis sur une certaine largeur de manière à autoriser un chevauchement des bords amincis qui n'entraîne pas de surépaisseur notable. Autrement dit, le ruban est constitué d'une section centrale à section sensiblement rectangulaire et de deux bords longitudinaux plus minces que la section centrale. Avantageusement, l'épaisseur des bords est uniforme et égale sensiblement à la moitié de l'épaisseur de la section centrale ; leur largeur est avantageusement comprise entre 5% et 15% de la largeur de la section centrale, et de préférence au voisinage de 10%.

L'amincissement des bords en recouvrement est connu en soi, dans des domaines très éloignés de l'invention, par exemple dans les assemblages de planches à clin ou par le document JP 59035924 qui décrit une bande en résine multicouche destinée à former un tube transparent qui sera ensuite sectionné pour former des conteneurs. La bande est réalisée avec un amincissement des bords latéraux et est enroulée sans jeu sur elle-même avec soudage des bords. Il s'agit de la bande constitutive du tube lui-même mais nullement d'une bande de renfort d'une conduite. De plus, la bande est en résine homogène et non un ruban textile dont le mode de fabrication est totalement différent.

L'invention vise également la conduite dont le renforcement est obtenu par l'enroulement de rubans textiles plats conformes à l'invention, et grâce auxquels il est possible de prévoir des rubans plus larges et donc globalement moins de rubans, avantageusement moins de 10 par couche de renforcement.

D'autres caractéristiques et avantages de l'invention apparaîtront à la lecture de la description suivante de plusieurs exemples de réalisation, se référant aux dessins annexés sur lesquels :
- la figure 1 est une vue en perspective d'une conduite comportant des couches de renfort réalisées par l'enroulement d'un ruban conforme à l'invention,
- la figure 2 est une vue en perspective d'un premier mode de réalisation de ruban plat conforme à l'invention,
- les figures 3 et 4 sont des vues en coupe d'un second et d'un troisième modes de réalisation de ruban plat conforme à l'invention,
- la figure 5 est une vue en coupe d'un enroulement de ruban du deuxième mode de réalisation, montrant le chevauchement des bords,
- la figure 6 est une vue en coupe d'un quatrième mode de réalisation de l'invention.

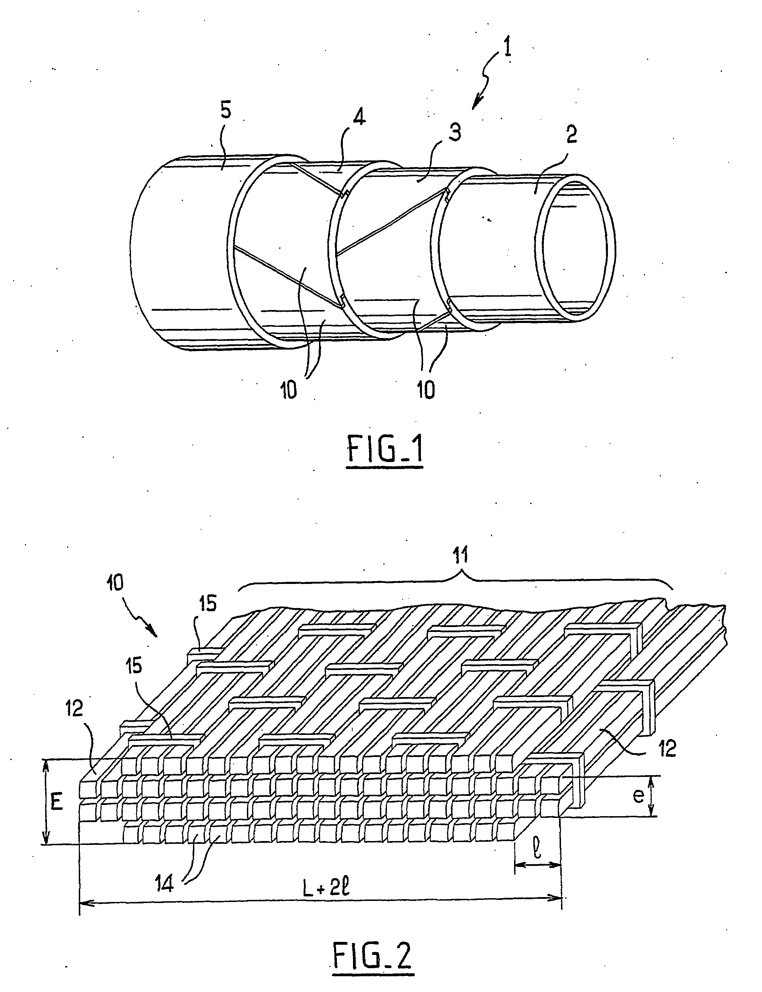

La figure 1 montre une conduite 1 de transport de fluides sous pression, constituée d'un tube interne 2 par exemple extrudé, recouvert d'une première nappe 3 et d'une seconde nappe 4 de rubans de renfort, et d'une gaine d'étanchéité externe 5 également extrudée. Les nappes de renfort 3 et 4 sont réalisées par enroulement contrecroisé d'un ruban plat 10 conforme à l'invention, avec un angle de pose de sensiblement 55° (entre 52° et 58°) par rapport à l'axe longitudinal de la conduite. Comme on le voit sur la figure, les bords des rubans 10 adjacents se recouvrent. Le nombre total n de rubans 10 sur la périphérie est relativement faible ; on le choisit de préférence inférieur à 10, ce qui pour un diamètre et un angle de pose donnés permet de déterminer une largeur moyenne minimale préférentielle des rubans égale à πDcosα/10 (la largeur moyenne exposée du ruban, définie comme la largeur de la section centrale augmentée de la largeur d'un seul bord pour tenir compte des chevauchements, est prise égale à πDcosα/n, où D est le diamètre extérieur du tube 2, n est le nombre de rubans et α est l'angle de pose de la nappe de rubans).

Les figures 2 à 4 montrent trois modes de réalisation de ruban qui diffèrent par la disposition des bords minces. Pour des raisons de clarté des dessins, la largeur des bords par rapport à celle de la section centrale du ruban a été exagérée sur les dessins.

Le ruban 10 de l'invention, de largeur moyenne L+ℓ, est constitué d'une section centrale 11 à section rectangulaire, de largeur L et d'épaisseur E, encadrée latéralement par deux bords ou ailes longitudinales 12, de largeur ℓ et d'épaisseur e. On a de préférence e = E/2 et L/20 < ℓ < 3L/20.

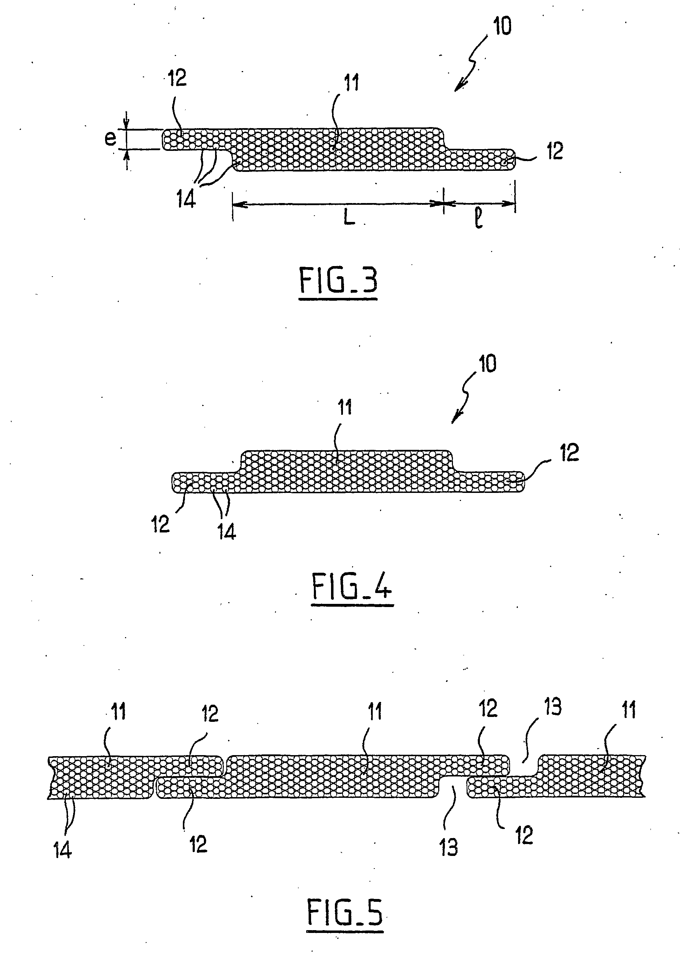

Les ailes 12 peuvent être disposées à mi-hauteur des bords de la section centrale 11 (figure 2), de façon alternée en haut et bas des deux bords de la section centrale 11 (figures 3 et 5) ou exclusivement en bas (ou en haut) des deux bords de la section centrale 11, ou selon toute autre disposition. Bien que la disposition des figures 3 et 5 soit celle qui se prête le plus naturellement au recouvrement des bords 12, les autres dispositions conviennent en pratique, compte tenu de la souplesse du ruban et de sa déformation lors de l'enroulement.

Comme le montre la figure 2, et plus schématiquement les figures 3 à 5, le ruban de l'invention est un ruban textile formé de couches de mèches filamentaires 14 maintenues par des moyens de contention 15. Il est par exemple constitué conformément à l'enseignement du document EP 0 85 3 547 de couches de mèches filamentaires 14 agglomérées les unes aux autres et maintenues par des moyens de contention 15 et une matière de liage de manière à maintenir une compacité globale forte, par exemple d'au moins 39%. La matière de liage, par exemple une matière thermoplastique revêtant les mèches filamentaires n'est pas représentée. Toutefois, le ruban peut également être constitué uniquement d'un tissage de mèches filamentaires par un fil de trame sans matière de liage. Dans le cas d'un ruban tissé sans matière de liage, la compacité est avantageusement maintenue importante, par exemple d'au moins 39%. Les mèches filamentaires 14 utilisées en fil de chaîne peuvent être de tout type tel qu'en aramide (Kevlar®, Twaron ®, Technora ®) ou en carbone par exemple. Les bords 12 sont constitués de la même matière que la section centrale, sur une épaisseur moindre simplement, donc par exemple avec un nombre inférieur de couches de mèches filamentaires. Il est avantageux, selon l'invention, d'espacer les moyens de contention (fils de trame) de manière à permettre lors de la flexion de la conduite aux rubans enroulés de se distordre et à leur fibres longitudinales de se réorganiser.

Comme l'illustre la figure 5, le ruban 10 de l'invention permet d'accommoder le jeu global lors du rubanage en chevauchant au moins partiellement les bords 12 des rubans adjacents. Ce chevauchement au moins partiel des bords 12 empêche la formation de déjoints traversants (sur toute l'épaisseur de la couche de renforcement) entre deux bandes. Il ne se forme que tout au plus un jeu 13 inférieur à la largeur ℓ du bord et qui n'est pas traversant. Le jeu 13 extérieur peut entraîner une légère rentrée de la gaine extérieure, mais celle-ci se trouve cependant bloquée par le bord inférieur 12 partiellement recouvert par le bord supérieur 12 du ruban adjacent. D'autre part, si les caractéristiques mécaniques des bords 12 sont identiques à celles de la section centrale 11, la présence d'un jeu entraîne une légère dégradation des caractéristiques mécaniques de la nappe d'armure à ce niveau pouvant conduire a priori à une pression d'éclatement inférieure à celle qu'on obtiendrait avec un arrangement de rubans étroits classiques sans jeu. On peut pallier cet inconvénient en prévoyant des caractéristiques mécaniques différentes, supérieures, au niveau des bords, par exemple par une modification de la nature ou du degré de torsion des mèches filamentaires utilisées, ou par une compacité différente. En particulier, il peut être intéressant d'utiliser dans les bords des fibres présentant un allongement à la rupture supérieur à celui des fibres utilisées dans la partie centrale.

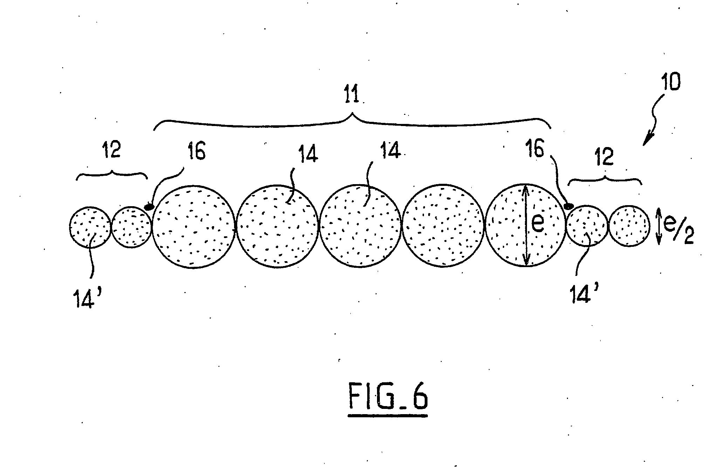

Le mode de réalisation du ruban 10 de la figure 6 diffère de celui de la figure 2 en ce qu'au lieu d'être réalisé par plusieurs épaisseurs de mèches filamentaires, il n'est réalisé que par un tissage sur deux dimensions (fils de trame, fils de chaîne), avec une seule épaisseur de mèches filamentaires 14, 14'. Les mèches 14 de la partie centrale 11 sont de dimensions plus importantes que les mèches 14' des parties de bord mince 12.

Il est également avantageux de prévoir sur le ruban 10 un traceur, par exemple un fil de couleur 16, qui permet de visualiser la localisation du ruban lors de l'enroulement. Ce fil 16 est placé avantageusement entre le bord 12 et la partie centrale 11 du ruban 10 (on ne l'a illustré que sur la figure 6, mais il peut s'adapter à tous les modes de réalisation) pour matérialiser l'interface. Ainsi, il est possible de contrôler visuellement qu'aucun bord 12 de ruban ne chevauche une partie centrale 11 de ruban (il doit toujours y avoir deux traceurs 16 côte à côte ; aucun traceur 16 ne doit être recouvert si l'enroulement est correctement réalisé).

## Revendications

1. Ruban textile plat, destiné à réaliser, par enroulement autour d'un tube, l'armure d'une conduite servant à véhiculer un fluide sous pression,
**caractérisé en ce que** le ruban (10) est constitué d'une section centrale (11) à section sensiblement rectangulaire et de deux bords longitudinaux (12) plus minces que la section centrale.

2. Ruban selon la revendication 1, **caractérisé en ce que** l'épaisseur des bords longitudinaux (12) est sensiblement égale à la moitié de l'épaisseur de la section centrale (11).

3. Ruban selon l'une quelconque des revendications précédentes, **caractérisé en ce que** la largeur des bords (12) est comprise entre 5% et 15% de la largeur de la section centrale (11).

4. Ruban selon l'une quelconque des revendications précédentes, **caractérisé en ce que** la compacité du ruban est égale ou supérieure à 39 %.

5. Ruban selon l'une quelconque des revendications précédentes, **caractérisé en ce qu'**il est constitué de mèches filamentaires assemblées par des moyens de contention et une matière de liage thermoplastique.

6. Ruban selon l'une quelconque des revendications 1 à 5, **caractérisé en ce qu'**il est constitué par une seule épaisseur de mèche filamenteux (14, 14') de dimensions différentes dans la partie centrale (11) et dans les bords (12).

7. Ruban selon l'une quelconque des revendications 1 à 6, **caractérisé en ce que** le ruban (10) est muni de traceur (16) dans la zone de frontière entre la partie centrale (11) et les bords (12).

8. Conduite de transport de fluide sous pression, constituée d'un tube interne (2) revêtu d'au moins une nappe (3, 4) de rubans textiles plats (10) enroulés de manière hélicoïdale sur le tube (2),
**caractérisée en ce que** les rubans (10) sont constitués d'une section centrale (11) à section sensiblement rectangulaire et de deux bords longitudinaux (12) plus minces que la section centrale, les rubans (10) étant enroulés avec recouvrement au moins partiel des bords latéraux (12).

9. Conduite selon la revendication 8, **caractérisée en ce que** l'angle de pose des rubans (10) par rapport à l'axe longitudinal de la conduite est compris entre 52° et 58°, préférentiellement choisi égal à 55°.

10. Conduite selon l'une quelconque des revendications 8 ou 9, **caractérisée en ce que** le nombre de rubans plats de l'enroulement est inférieur à 10.

11. Conduite selon l'une quelconque des revendications 8 à 9, **caractérisée en ce que** la largeur moyenne des rubans (10) est égale ou supérieure à πDcosα/10, où D est le diamètre extérieur du tube 2 et α est l'angle de pose de la nappe (3, 4) de rubans (10).

## Patentansprüche

1. Flacher Textilstreifen, der durch Umwicklung eines Rohrs zur Bildung der Bewehrung einer Leitung zur Förderung eines unter Druck stehenden Fluids dient, **dadurch gekennzeichnet, dass** der Streifen (10) aus einem zentralen Abschnitt (11) mit einem im Wesentlichen rechteckigen Querschnitt und aus zwei Längsrändern (12), die kleiner als der zentrale Abschnitt sind, gebildet ist.

2. Streifen nach Anspruch 1, **dadurch gekennzeichnet, dass** die Dicke der Längsränder (12) im Wesentlichen gleich der Hälfte der Dicke des zentralen Abschnitts (11) ist.

3. Streifen nach einem der vorhergehenden Ansprüche, **dadurch gekennzeichnet, dass** die Breite der Ränder (12) zwischen 5 % und 15 % der Breite des zentralen Abschnitts (11) aufweist.

4. Streifen nach einem der vorhergehenden Ansprüche, **dadurch gekennzeichnet, dass** die Dichte bzw. Packungsdichte des Streifens gleich oder größer als 39 % ist.

5. Streifen nach einem der vorhergehenden Ansprüche, **dadurch gekennzeichnet, dass** er faserige Dochte aufweist, die durch Haltemittel und einem thermoplastischen Bindewerkstoff zusammengefügt sind.

6. Streifen nach einem der Ansprüche 1 bis 5, **dadurch gekennzeichnet, dass** er durch eine einzelne Dicke von faserigen Dochten (14, 14') von unterschiedlichen Abmessungen in dem zentralen Abschnitt (11) und in den Rändern (12) gebildet ist.

7. Streifen nach einem der Ansprüche 1 bis 6, **dadurch gekennzeichnet, dass** der Streifen (10) mit einem Kennfaden (16) in dem Grenzbereich zwischen dem zentralen Abschnitt (11) und den Rändern (12) ausgerüstet ist.

8. Leitung zur Förderung von unter Druck stehenden Fluiden, die aus einem inneren Rohr (2) mit mindestens einem Mantel (3, 4) bzw. einer Schale aus flachen Textilstreifen (10) umhüllt ist, welche in einer schraubenförmigen Weise um das Rohr (2) herumgewickelt sind,
**dadurch gekennzeichnet, dass** die Streifen (10) aus einem zentralen Abschnitt (11) mit einem im Wesentlichen rechteckigen Querschnitt und aus zwei Längsrändern (12), gebildet sind, die kleiner als der zentrale Abschnitt sind, wobei die Streifen (10) mit mindestens teilweiser Überdeckung der Seitenränder (12) aufgewickelt sind.

9. Leitung nach Anspruch 8, **dadurch gekennzeichnet, dass** der Verlegungswinkel der Streifen (10) in Bezug auf die Längsachse der Leitung zwischen 52° und 58° beträgt, vorzugsweise gleich 55° ausgewählt ist.

10. Leitung nach einem der Ansprüche 8 oder 9, **dadurch gekennzeichnet, dass** die Anzahl von flachen Streifen der Umwicklung kleiner als 10 beträgt.

11. Leitung nach einem der Ansprüche 8 bis 9, **dadurch gekennzeichnet, dass** die mittlere Breite der Streifen (10) gleich oder größer ist als πDcosα/10, wobei D der äußere Durchmesser des Rohrs (2) und α der Verlegungswinkel des Mantels (3, 4) der Streifen (10) ist.

## Claims

1. A flat textile tape, intended to produce, by winding around a tube, the armor for a pipe serving to convey a pressurized fluid, **characterized in that** the tape (10) is formed from a central section (11) of approximately rectangular cross section and from two longitudinal edges (12) that are thinner than the central section.

2. The tape as claimed in claim 1, **characterized in that** the thickness of the longitudinal edges (12) is approximately equal to one half of the thickness of the central section (11).

3. The tape as claimed in either of the preceding claims, **characterized in that** the width of the edges (12) is between 5% and 15% of the width of the central section (11).

4. The tape as claimed in any one of the preceding claims, **characterized in that** the weave density of the tape is equal to or greater than 39%.

5. The tape as claimed in any one of the preceding claims, **characterized in that** it is formed from filament rovings held together by binding means and a thermoplastic bonding material.

6. The tape as claimed in any one of claims 1 to 5, **characterized in that** it is formed by a single thickness of filament rovings (14, 14') having different dimensions in the central part (11) and in the edges (12).

7. The tape as claimed in any one of claims 1 to 6, **characterized in that** the tape (10) is provided with a tracer (16) in the region of the boundary between the central part (11) and the edges (12).

8. A pipe for transporting a pressurized fluid, consisting of an internal tube (2) coated with at least one ply (3, 4) of flat textile tapes (10) wound helically on the tube (2), **characterized in that** the tapes (10) are formed from a central section (11) having an approximately rectangular cross section and from two longitudinal edges (12) that are thinner than the central section, the tapes (10) being wound with at least partial overlapping of the lateral edges (12).

9. The pipe as claimed in claim 8, **characterized in that** the lay angle of the tapes (10) relative to the longitudinal axis of the pipe is between 52° and 58°, preferably chosen to be 55°.

10. The pipe as claimed in either of claims 8 or 9, **characterized in that** the number of flat tapes of the winding is less than ten.

11. The pipe as claimed in any one of claims 8 to 9, **characterized in that** the mean width of the tapes (10) is equal to or greater than πDcosα/10, where D is the outside diameter of the tube 2 and α is the lay angle of the ply (3, 4) of tapes (10).
